# NEUE EUROPÄISCHE PATENTSCHRIFT

(11) **EP 2 411 428 B2**
(45) Veröffentlichungstag und Bekanntmachung des Hinweises auf die Entscheidung über den Einspruch: **27.11.2019**
(45) Hinweis auf die Patenterteilung: 02.07.2014
(21) Anmeldenummer: 10701684.2
(22) Anmeldetag: 29.01.2010
(51) Int. Cl.: C08F 230/08, C08G 65/336, C09J 143/04, C09J 171/02

(54) **ERSTARRENDE KLEBSTOFFE MIT SILANVERNETZUNG**
SOLIDIFYING ADHESIVES HAVING SILANE CROSS-LINKING
COLLE SE SOLIDIFIANT À RÉTICULATION SILANE

(30) Priorität: 24.03.2009 DE 102009001771
(43) Veröffentlichungstag der Anmeldung: 01.02.2012
(73) Patentinhaber: Henkel AG & Co. KGaA, 40589 Düsseldorf (DE)
(72) Erfinder: KOHL, Matthias, 69469 Weinheim (DE); PRÖBSTER, Manfred, 69226 Nußloch (DE); FONCILLAS, Sandra, 69207 Sandhausen (DE)
(86) Internationale Anmeldenummer: PCT/EP2010/051096
(87) Internationale Veröffentlichungsnummer: WO 2010/108716

(56) Entgegenhaltungen:
- WO-A2-2004/083296
- DE-A1- 10 237 271
- DE-A1-102006 059 473
- US-A1- 2007 219 311

## Beschreibung

Die Erfindung betrifft bei Raumtemperatur feste, bei Erwärmung fließfähig applizierbare Ein-Komponenten-Klebstoffe auf Basis von Silan-funktionalisierten Prepolymeren zusammen mit thermoplastischen Bindemitteln, die als feuchtigkeitsvernetzende Kleb- und Dichtstoff zum Verkleben von Bauteilen geeignet sind.

Feuchtigkeitshärtende elastische Kleb- und Dichtstoffe werden in der Industrie in weiten Bereichen verwendet. Dabei ist es gewünscht, dass diese Verklebungen auf unterschiedlichen Substraten durchgeführt werden können, ohne dass eine Vorbehandlung durch einen Primer oder durch physikalische Methoden, wie Corona-Behandlung oder Plasma-Behandlung durchgeführt werden müssen. Solche Kleb- und Dichtstoffe auf Basis reaktiven Polyurethan-Prepolymeren sind bekannt. Diese enthalten häufig bedingt durch die Herstellung noch geringe Anteile an monomeren Isocyanaten. Das ist aber gesundheitlich bedenklich, insbesondere bei der Verarbeitung. Außerdem hat es sich erwiesen, dass Klebstoff auf PU-Basis nicht den Anforderungen an UV-Stabilität oder Witterungsstabilität bei Exposition an Licht und üblichem Wetter genügen.

Weiterhin sind Dichtstoffzusammensetzung bekannt, die ein Polymerrückgrat auf Basis von Polymeren unterschiedlicher Zusammensetzung aufweisen, die zusätzlich mit Feuchtigkeit vernetzbare Silangruppen enthalten. Beispielsweise beschreibt die US 4,222,925 A eine Dichtungsmasse, die eine Mischung enthält, aus einem Polyurethan-Prepolymeren, dass an der Kette Alkoxysilan-Gruppen enthält, sowie geringe Anteile von γ-Aminopropyl-Trimethoxysilan. Weiterhin können Füllstoffe und andere Additive enthalten sein.

Die DE 10237271 beschreibt Polymermassen, die Alkoxysilan-terminierte Polymere enthalten. Weiterhin können als Katalysatoren Säuren, Basen, organische Metallverbindungen oder organische Aminoverbindungen enthalten sein. Weiterhin können in der Polymermasse Weichmacher oder Füllstoffe enthalten sein.

In der EP 1303569 werden Polymere beschrieben, die an einem Polymerrückgrat mindestens zwei Si(OR)-Gruppen tragen. Die Bindemittel können in Klebstoffen, Lacken oder Schaumvorläufern eingesetzt werden. Eine nähere Beschreibung der Klebstoffe wird nicht angegeben.

Weiter ist DE 102006059473 bekannt. Diese beschreibt einkomponentige Kleb- und Dichtstoffmassen, die aus einem Silan-funktionellen Polyoxyalkylenprepolymer und einem silanfunktionellen Polyolefin besteht. Zu dieser Masse werden verschiedene Additive zugegeben, beispielsweise unpolare Weichmacher, sowie die bekannten klebrigmachenden Harze.

In der DE 10 2008 003 743 werden Mischungen von Polymeren beschrieben, die vernetzbare Silangruppen enthalten. Es werden verschiedene Additive beschrieben. Die Zubereitungen sollen jedoch eine Viskosität von unter 80 000 mPas aufweisen.

Klebstoffe gemäß dem bekannten Stand der Technik hat den Nachteil, dass häufig die mechanischen Eigenschaften nicht ausreichend sind. Eine gute Elastizität ist häufig nicht gegeben, insbesondere wenn eine hohe Vernetzungsdichte des Dichtstoffs erhalten wird. Ist die Vernetzungsdichte geringer, wird häufig ein zu weiches oder bei Erwärmung kriechendes Material erhalten. Weiterhin haben solche Dichtstoffe die Eigenschaft, dass sie zwar bei Raumtemperatur gut aufgetragen werden können, dass aber für eine stabile Verbindung der Substrate vor der chemischen Vernetzung zusätzliche Haltevorrichtungen angebracht werden müssen. Eine mechanische Stabilität zur Weiterverarbeitung als Anfangsfestigkeit ist nicht gegeben.

Aufgabe der vorliegenden Erfindung ist es deshalb, einen bei leicht erhöhten Temperaturen gut auftragbaren Klebstoff zur Verfügung zu stellen, der nach Abkühlung auf Raumtemperatur eine vorläufig mechanisch stabile Verbindung der beiden Substrate ergibt. Diese können danach weiterverarbeitet oder transportiert werden, ohne dass ein Verrutschen oder eine Trennung der Substrate erfolgt. Weiterhin sollen diese Klebstoffe nach Vernetzen eine gut haftende und elastische Verbindung der Substrate ergeben. Eine weitere Aufgabe der vorliegenden Erfindung ist es, dass diese Kleb- und Dichtstoffe ohne Primer auf den verschiedenen Substraten aufgetragen werden können und eine gute Haftung ergeben. Ein Ausschwitzen von Bestandteilen und eine Schwächung der Substrat/Klebstoffbindung soll vermieden werden.

Diese Aufgabe wird gelöst durch die Bereitstellung eines Ein-Komponenten feuchtigkeitshärtenden, bei 23 °C in nicht vernetztem Zustand eine Viskosität größer 300 Pas, bestimmt nach Physika, Platte/Platte Messkopf, D = 10sec⁻¹, aufweisenden Klebstoffes enthaltend
a) 10 bis 40 Gew.-% mindestens eines fließfähigen Polyoxyalkylen- oder Polyacrylat-Prepolymers mit mindestens einer hydrolysierbaren Silangruppe,
b) 0,5 bis 10 Gew.-% mindestens eines bei Raumtemperatur festen inerten. Zusatzmittels mit einem Erweichungspunkt, gemessen nach DIN ISO 4625, von mehr als 70 bis 150 °C ausgewählt aus Kohlenwasserstoffharzen, Polyestern oder Polyamiden,
c) 20 bis 60 Gew.-% Pigmente und Füllstoffe, sowie
d) 0,01 bis 25 Gew.-% Hilfsstoffe und Additive,
wobei die Summe 100 % betragen soll.

Als Polyoxyalkylen-Prepolymere mit mindestens einer hydrolisierbaren Silangruppe im Sinne dieser Erfindung werden dabei solche Prepolymere auf der Basis von Polyethern bezeichnet, die hydrolysierbare Silangruppen aufweisen. Diese silan-haltigen Prepolymere auf der Basis von Polyethern können prinzipiell auf verschiedene Weise hergestellt werden.

Das Polymerrückgrat ist auf Basis von Polyoxyalkylenketten aufgebaut. Die Ketten können an den Kettenenden funktionelle Gruppen tragen, die dann in weiterer Reaktion zu Silangruppen umgesetzt werden. Beispielsweise sind Polyetherpolyole als Ausgangspolymer geeignet.

Als Polyole für die erfindungsgemäßen Zusammensetzungen werden Polyoxyalkylenpolyole eingesetzt. Es kann sich dabei um die bekannten Polyetherpolyole auf Basis von Polyethylenoxid, Polypropylenoxid oder Poly-THF handeln, wobei auch Mischungen mit unterschiedlichen Bausteinen eingesetzt werden können. Insbesondere geeignet sind di- oder trifunktionelle Polyetherolyole auf Basis von Polypropylenglycol. Solche Polyole sind dem Fachmann bekannt.

Erfindungsgemäß können ebenso Mischungen mehrerer Polyetherpolyole mit verschiedenen Molekulargewichten eingesetzt werden. Solche Polyole können anschließend mit Silangruppen funktionalisiert werden.

Beispielsweise werden hydroxyfunktionelle Polyether mit ungesättigten Chlorverbindungen, z.B. Allylchlorid, in einer Ethersynthese in Polyether mit endständigen olefinischen Doppelbindungen umgesetzt, die ihrerseits mit Hydrosilanverbindungen, die hydrolysierbare Gruppen haben, wie z.B. HSi(OCH₃)₃ in einer Hydrosilylierungsreaktion unter dem katalytischen Einfluss von beispielsweise Übergangsmetallverbindungen der 8. Gruppe zu silanterminierten Polyethern umgesetzt werden.

In einem anderen Verfahren werden olefinisch ungesättigte Gruppen enthaltende Polyether mit einem Mercaptosilan wie z.B. 3-Mercaptopropyltrialkoxysilan umgesetzt.

Bei einem weiteren Verfahren werden zunächst OH-haltige Polyether mit Di-oder Polyisocyanaten im Überschuss umgesetzt, die dann anschließend mit aminofunktionellen, hydroxyfunktionellen oder mercaptofunktionellen Silanen zu silanterminierten Prepolymeren umgesetzt werden. Als Isocyanate sind insbesondere die bekannten aliphatischen oder aromatischen Diisocyante geeignet, wie 1,6-Hexamethylendiisocyanat (HDI), 1-Isocyanato-3,3,5-trimethyl-5-isocyanatomethylcyclohexan (IPDI), Xylylendi-isocyanat (XDI), Tetramethylxylylendiisocyanat (TMXDI), 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) sowie deren Isomerengemische. Die Menge wird so gewählt, dass ein NCO-terminiertes Prepolymer erhalten wird. Diese Umsetzungsprodukte werden dann mit Silanen weiter umgesetzt, die hydrolysierbare Gruppen aufweisen sowie eine mit NCO-Gruppen reagierende Gruppe.

Eine weitere Möglichkeit sieht die Umsetzung von hydroxyfunktionellen Polyethern mit isocyanatofunktionellen Silanen vor. Auswahl der Silane, Verfahren und Reaktionsbedingungen sind dem Fachmann bekannt.

Die mindestens eine Silangruppe soll hydrolysierbare Reste enthalten. Beispiel für solche Reste -Cl, -O-C(=O)R¹, -OR¹, wobei R¹ für einen Kohlenwasserstoffrest mit 1 bis 20 C-Atomen steht. Insbesondere sind C₁ bis C₆ -Alkoholreste oder C₂ und C₃ -Carbonsäurereste bevorzugt. Diese Reste können entweder allein oder auch gemischt am Siliziumatom enthalten sein. Die Anzahl dieser Reste soll eins bis drei betragen, insbesondere zwei oder drei. Beispielsweise sind Tri- oder Dialkoxysilangruppen mit Methoxy-, Ethoxy-, Propoxy- oder Butoxygruppen geeignet. Es können auch zusätzlich 0, 1 oder 2 Alkylgruppen am Siliziumatom enthalten sein, insbesondere Methyl-, Ethyl-, Propyl- oder Butylgruppen. Weiterhin muss eine mit den OH-Gruppen oder NCO-Gruppen reaktive weitere Gruppe vorhanden sein. Diese weitere funktionelle Gruppe ist durch einen aliphatischen Alkylrest am Silan anreagiert, beispielsweise durch C₂- bis C₆-alkyl. Dabei kann die funktionelle Gruppe beispielsweise endständig zur Alkylgruppe sein oder diese ist α-ständig zum Silan. Beispiele für nucleophile Substituenten enthaltende Silane sind 3-Mercaptopropyltrimethoxysilan, 3-Aminopropyltrimethoxysilan, N-(2-Aminoethyl)-3-aminopropyltrimethoxysilan oder N-(2-Aminoethyl)-3-aminopropylmethyldiethoxysilan, entsprechende Ethoxy- oder Propoxy-Silane und die analogen Alkyl-, beispielsweise Methyl-, Ethyl, Butyl-, -dialkoxysilane. Beispiele für NCO-Gruppen enthaltende Silane sind Trimethoxysilylpropylisocyanat, Trimethoxysilylpentylisocyanat, Trimethoxysilylbutylisocyanat sowie entsprechende-Ethoxy- oder Propoxy-Silane, oder analoge Methyl-dialkoxy-substituierte Silane. Es sind auch Silane mit gemischten Alkoxygruppen geeignet.

Die Anzahl der Silangruppen muss mindestens eine pro Molekül betragen, insbesondere sind jedoch zwei bis vier Gruppen enthalten. In einer besonderen Ausführungsform sind die Silangruppen endständig zu der Polyetherkette.

Erfindungsgemäß geeignete Polyether, die eine ausreichende Anzahl von Silangruppen aufweisen, sind kommerziell in unterschiedlichen Molekulargewichten oder Kettenaufbau erhältlich.

Die reaktiven Polyoxyalkylenprepolymere sind üblicherweise bei Raumtemperatur (25°C) hochviskos. Die Viskosität kann von 5000 bis zu 100.000 mPas betragen (gemessen nach Brookfield, EN ISO 2555).

Eine andere Ausführungsform der erfindungsgemäßen Zusammensetzung setzt als Prepolymer auf Basis von Polyacrylaten ein, die ebenfalls mindestens eine hydrolysierbare Silangruppe an der Polymerkette aufweisen. Unter Polyacrylat-Polymeren sollen im Sinne dieser Erfindung auch Methacrylatpolymere und Copolymere verstanden werden. Ebenso ist es möglich gemischte Blockcopolymere aus Polyethern und Polyacrylaten einzusetzen.

Die erfindungsgemäß geeigneten Poly(meth)acrylat sind Polymerisationsprodukte von einem oder mehreren Alkyl(meth)acrylatestern mit 1 bis 12 C-Atomen im Alkoholrest. Gegebenenfalls können auch geringe Anteile an (Meth)acrylsäure oder andere copolymerisierbare Monomere, beispielsweise Styrol, Vinylester, Acrylamide, enthalten sein. Insbesondere sind C₁- bis C₈-(Meth)Acrylatester geeignet. Solche Polymere sind dem Fachmann bekannt und können auf verschiedene Art und Weise hergestellt werden. Sie sind ebenfalls in verschiedenen chemischen Zusammensetzungen kommerziell erhältlich.

Erfindungsgemäß geeignete Acrylatcopolymere sollen mindestens eine bevorzugt zwei insbesondere zwischen 2 und 5 hydrolysierbare Silangruppen aufweisen. Bei diesen Silangruppen handelt es sich um die weiter oben erwähnten Silangruppen mit hydrolisierbaren Resten. Insbesondere sind auch in diesem Falle Di- oder Trialkoxysilangruppen bevorzugt mit C₁- bis C₄-Alkoxygruppen.

Die Silane können über verschiedene Herstellungsweisen mit dem Polymergrundgerüst gebunden werden. Beispielsweise ist es möglich Silane, die einen ungesättigten Rest und hydrolisierbare Gruppen enthalten, einzupolymerisieren. In diesem Fall sind die Silangruppen dann statistisch über die Polymerkette verteilt.

Eine andere Arbeitsweise arbeitet derart, dass Acrylatpolymere mit ungesättigten Gruppen hergestellt werden, wobei die ungesättigten Doppelbindungen danach mit Silanen umgesetzt werden. In diesem Falle ist es auch möglich, solche ungesättigten Gruppen und damit die Silangruppen endständig am Acrylatcopolymer zu erhalten.

Eine weitere Arbeitsweise ist die, dass OH-Gruppen-haltige Acrylatpolymere hergestellt werden. Diese können dann direkt mit Isocyanato-Silanen umgesetzt werden, oder sie werden mit einem Überschuss an Diisocyanaten umgesetzt, wobei die nicht reagierten Isocyanat-Gruppen danach mit Silanen umgesetzt werden, die zusätzlich nucleophile Gruppen enthalten. Geeignete Silane sind bereits weiter oben aufgeführt.

Eine weitere Ausführungsform der Erfindung setzt Acrylatblockcopolymere ein, die ebenfalls hydrolysierbare Silangruppen aufweisen. Solche Polymere sind beispielsweise in der DE 10 2008 002 016 beschrieben. Poly(meth)acrylatcopolymere mit einer oder mehreren reaktiven Silangruppen sind auch kommerziell erhältlich.

In einer bevorzugten Ausführungsform der erfindungsgemäßen Zusammensetzung beträgt das Molekulargewicht (zahlenmittleres Molekulargewicht, M_{N} , über GPC bestimmbar) der Acrylat- oder Polyether- Polymere zwischen 1500 und 75000 g/mol. Weitere besonders bevorzugte Molekulargewichtsbereiche sind 2000 bis 50000 g/mol, ganz besonders bevorzugt sind 3000 bis 30000 g/mol. Diese Molekulargewichte sind besonders vorteilhaft, da Zusammensetzungen mit diesen Molekulargewichten Viskositäten aufweisen, die eine gute Verarbeitbarkeit ermöglichen. Ganz besonders bevorzugt werden Polymere, eingesetzt, die eine Polydispersität D (gemessen als M_{W}/ M_{N}) von weniger als 2, bevorzugt weniger als 1,5 aufweisen, insbesondere weniger als 1,2.

Es ist auch denkbar, Polymere mit einem höheren Molekulargewicht einzusetzen. Ist wegen eines beispielsweise hohen Molekulargewichts oder starker innerer Bindungskräfte die Viskosität der erfindungsgemäßen Zusammensetzung höher als gewünscht, kann man die Verarbeitungsviskosität über die Zugabe von Reaktivverdünnern oder Weichmachern einstellen und so eine Zubereitung herstellen, die die gewünschten Eigenschaften aufweist.

Es ist möglich, die Silan-haltigen Polymere auf Basis von Polyethern oder Polyacrylaten einzeln, mit unterschiedlicher Zusammensetzung oder Molekulargewicht auch im Gemisch einzusetzen. Dabei ist auch die Verträglichkeit der Polymere zu achten. Die Verträglichkeit kann über die Polymere selbst beeinflusst werden, beispielsweise weisen Acrylate mit Anteilen an längerkettigen Alkylacrylaten als Monomerbestandteil verstärkt unpolare Eigenschaften auf.

Als weitere erfindungsgemäß notwendige Komponente ist mindestens ein inertes Zusatzmittel mit einem Erweichungspunkt von mehr als 70 bis 150 °C (gemessen nach DIN ISO 4625) ausgewählt aus Kohlenwasserstoffharzen, Polyestern oder Polyamiden enthalten. Diese Komponente soll bei Raumtemperatur fest vorliegen. Sie kann aufgeschmolzen werden, erstarrt beim Abkühlen danach schnell wieder. Diese Komponente kann aus festen Polyestern, aus festen Polyamiden und/oder aus festen Kohlenwasserstoffharzen bestehen, die als Polymere oder Oligomere vorliegen können. Es ist möglich, dass diese Zusatzmittel auch noch funktionelle Gruppen enthalten, es sollen jedoch solche inerte Polymere ausgewählt werden, die keine mit den Silangruppen der Polymere reaktive Gruppen aufweisen, insbesondere keine Silangruppen.

Beispiele für Polyester als erfindungsgemäße Zusatzmittel sind Polyester, auch Polyesterpolyole, mit einem Molekulargewicht von etwa 500 bis etwa 10.000 g/mol. Es können dabei Polyester eingesetzt werden, die durch Umsetzung von niedermolekularen Alkoholen, insbesondere von Ethylenglykol, Diethylenglycol, Neopentylglycol, Hexandiol, Butandiol, Propylenglykol, Glycerin oder Trimethylolpropan mit Caprolacton entstehen. Ebenfalls als polyfunktionelle Alkohole zur Herstellung von Polyestern geeignet sind 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol.

Geeignete Polyester sind durch Polykondensation herstellbar. So können difunktionelle und/oder trifunktionelle Alkohole mit einem Unterschuss an Dicarbonsäuren und/oder Tricarbonsäuren oder deren reaktiven Derivaten, zu Polyesterpolyolen kondensiert werden. Geeignete Dicarbonsäuren sind beispielsweise Bernsteinsäure und ihre höhere Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Besonders geeignete Alkohole sind Hexandiol, Ethylenglycol, Diethylenglycol oder Neopentylglycol oder Gemische aus zwei oder mehr davon. Besonders geeignete Säuren sind Isophthalsäure oder Adipinsäure oder deren Gemisch.

Die Polyester können endständig OH-Gruppen aufweisen, sie können auch Carboxylgruppen enthalten. Es kann sich um lineare Polyester handeln, es ist jedoch auch möglich, verzweigte Polyester einzusetzen. Es kann sich um ein Polymer handeln, es können auch Gemische unterschiedlicher Polymere in Zusammensetzung oder Molekulargewicht eingesetzt werden. Die Erweichungstemperatur kann durch die Auswahl der Bestandteile beeinflusst werden. So erhöhen aromatische Anteile die Erweichungstemperatur, verzweigte oder aliphatische Bestandteile vermindern den Erweichungspunkt. Es werden kristalline Polyester bevorzugt.

Eine andere Klasse von erfindungsgemäß geeigneten bei Raumtemperatur festen Zusatzmitteln sind Kohlenwasserstoffharze. Es handelt sich dabei um natürliche, gegebenenfalls auch modifiziert, oder synthetische Polymere. Die synthetischen Harze werden im allgemeinen durch Polymerisation oder Polykondensation gewonnen, natürliche Harze können aus Naturprodukten abgetrennt und hergestellt werden. Dabei ist es auch möglich, dass diese durch chemische Reaktionen in ihrer Beschaffenheit modifiziert werden. Beispiele für solche Bindemittel sind Pentadien-, Terpen-, Cumaron/Inden-, Furanharze, aliphatische oder alicyclische Petroleum-Kohlenwasserstoffharze und hydrierte Derivate, Styrolcopolymerharze oder Harze auf Basis funktioneller Kohlenwasserstoffharze. Diese können einzeln oder als Gemisch eingesetzt werden.

Weiterhin kann das feste Zusatzmittel ausgewählt sein aus Polyamiden. Solche Polyamide können beispielsweise hergestellt werden durch Umsetzung von primären Diaminen mit Dicarbonsäuren. Dabei werden die Dicarbonsäuren vorzugsweise in bis zu 10 % stöchiometischen Überschuß gegenüber den Diaminen eingesetzt, so daß Carboxyl - terminierte Polyamide entstehen.

Als Dicarbonsäuren sind beispielsweise C₂-C₁₄-Dicarbonsäuren geeignet oder auch Dimer- oder Polymerfettsäuren geeignet, die in bekannter Weise durch Dimerisierung von aus natürlichen Rohstoffen gewonnen ungesättigten, langkettigen Fettsäuren hergestellt werden und anschließend durch Destillation weitergereinigt werden können. Beispiele für Dicarbonsäuren sind insbesondere Bernsteinsäure, Glutarsäure, Adipinsäure, Pimelinsäure, Korksäure (Suberinsäure), Azelainsäure, Sebacinsäure, Undecandisäure oder Dodecandisäure oder auch aromatische Dicarbonsäuren, wie zum Beispiel Terephthalsäure, sowie Mischungen der vorgenannten Dicarbonsäuren. Insbesondere sind jedoch Polyamide geeignet, die zumindest zu mehr als 50% aus Dimerfettsäuren bestehen, insbesondere nur aus Dimerfettsäuren.

Die Amin-Komponente besteht im wesentlichen aus einem oder mehreren aliphatischen Diaminen, vorzugsweise mit einer geraden Anzahl an Kohlenstoffatomen, wobei die Aminogruppen an den Enden der Kohlenstoffketten sind. Die aliphatischen Diamine können 2 bis zu 20 Kohlenstoffatome enthalten, wobei die aliphatische Kette linear oder leicht verzweigt sein kann. Die Amin-Komponente kann weiterhin cyclische Diamine oder Polyoxyalkylendiamine, wie zum Beispiel Polyoxyethylendiamine, Polyoxypropylendiamine oder Bis-(di-aminopropyl)-polytetrahydrofuran, enthalten.

Über die Auswahl der Amin-Komponente kann Härte und Schmelzpunkt der Polyamide beeinflusst werden. Solche Polyamide sind dem Fachmann bekannt und kommerziell erhältlich. Es handelt sich beispielsweise um bei Temperaturen unter 200 °C schmelzbare Amide, insbesondere auf Basis von Fettsäuren, es können auch Polyamidwachse oder mikronisierte Polyamide ausgewählt werden. Der Erweichungspunkt der Zusatzmittel soll bei mehr als 70 bis 150 °C liegen (gemessen nach ASTM E2867, Ring & Ball ). Da die genannte Zusatzmittel Polymere sind, enthalten diese im Allgemeinen Bestandteile mit unterschiedlichem Molekulargewicht. Deswegen ist der Erweichungspunkt in der praktischen Ausführung nicht als Punktwert, sondern über einen Erweichungsbereich gegeben. In diesem Wertebereich ist dann ein Erweichen und Schmelzen der Komponente zu beobachten. Es hat sich gezeigt, dass der Erweichungsbereich des Zusatzmittels eng sein soll, dass heißt, das Zusatzmittel soll in einem engen Temperaturbereich aufschmelzen. Dabei soll der Erweichungsbereich weniger als +/- 15°C betragen insbesondere weniger als +/- 7°C, insbesondere +/- 3 °C. Wird der Erweichungsbereich zu breit gewählt, ist ein schnelles Erstarren und Verfestigen der Zusammensetzung nicht gegeben, damit kann keine ausreichende Anfangsfestigkeit erzielt werden.

Die Menge der festen Zusatzmittel soll von 0,5 bis 10 Gew.-% betragen bezogen auf den Klebstoff. Es können einzelne Zusatzmittel eingesetzt werden oder auch Mischungen. Es ist vorteilhaft, wenn die Zusatzmittel fein dispergiert in dem Klebstoff vorliegen.

Weiterhin enthält der erfindungsgemäße Klebstoff Hilfsstoffe und Additive. Das können beispielsweise Weichmacher, Stabilisatoren, Antioxidantien, Füllstoffe, Verdünner bzw. Reaktivverdünner, Trockenmittel, Haftvermittler und UV-Stabilisatoren, Fungizide, Flammschutzmittel, Katalysatoren, Pigmente, rheologische Hilfsmittel, Farbpigmente oder Farbpasten sein.

Als flüssige Weichmacher geeignet sind beispielsweise Weißöle, naphtenische Mineralöle, Polypropylen-, Polybuten-, Polyisopren-Oligomere, hydrierte Polyisopren- und/oder Polybutadien-Oligomere, Benzoatester, Phthalate, Adipate, pflanzliche oder tierische Öle und deren Derivate. Hydrierte Weichmacher werden beispielsweise ausgewählt aus der Gruppe der paraffinischen Kohlenwasserstofföle. Auch Polypropylenglykol und Polybutylenglykol, sowie Polymethylenglykol sind geeignet. Ggf. werden auch Ester als Weichmacher eingesetzt, z. B. flüssige Polyester und Glycerinester oder Weichmacher auf Basis aromatischer Dicarbonsäureester. Ebenso können auch Alkylmonoamine und Fettsäuren mit vorzugsweise 8 bis 36 C-Atomen geeignet sein.

Beispiele für Weichmacher sind Adipinsäureester, Azelainsäureester, Benzoesäureester, Buttersäureester, Essigsäureester, Ester höherer Fettsäuren, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon.

Beispielsweise eignen sich von den Phthalsäureestern Dioctylphthalat (DOP), Dibutylphthalat, Diisoundecylphthalat (DIUP) oder Butylbenzylphthalat (BBP), von den Adipaten Dioctyladipat (DOA), Diisodecyladipat, Diisodecylsuccinat, Dibutylsebacat oder Butyloleat. Ferner eignen sich als Weichmacher endgruppenverschlossene Polyethylenglykole. Beispielsweise Polyethylen- oder Polypropylenglykoldi-C1-4-alkylether, insbesondere die Dimethyl- oder Diethylether von Diethylenglykol oder Dipropylenglykol, sowie Gemische aus zwei oder mehr davon.

Eine weitere Klasse von bevorzugt einsetzbaren Weichmachern sind solche auf Basis von Sulfonsäureestern oder -amiden. Dabei kann es sich um Ester von alkylierten Sulfonsäuren handeln, wie aromatischen Sulfonsäuren.

Weichmacher können in dem Klebstoff zwischen 0 und 20, insbesondere auch keine Weichmacher oder zwischen 0,5 und 20 Gew.-% bezogen auf die Gesamtzusammensetzung enthalten sein. Es werden Weichmacher bevorzugt, die polaren Gruppen aufweisen, wie Ester-, Hydroxy-, Amid- oder Ethylenglykolgruppen. Geeignete Weichmacher sind dem Fachmann bekannt und kommerziell erhältlich.

Stabilisatoren im Sinne dieser Erfindung sind Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Ferner können auch Benzotriazole, Benzophenone, Benzoate, Cyanacrylate, Acrylate, sterisch gehinderte Phenole, Phosphor und/oder Schwefel zugegeben werden. Der erfindungsgemäße Zubereitung kann bis zu etwa 3 Gew.-%, vorzugsweise etwa 2 Gew.-% an Stabilisatoren enthalten.

Als Katalysatoren können alle bekannten Verbindungen eingesetzt werden, die die hydrolytische Spaltung der hydrolysierbaren Gruppen der Silangruppierungen sowie die anschließende Kondensation der Si-OH-Gruppe zu Siloxangruppierungen (Vernetzungsreaktion bzw. Haftvermittlungsfunktion) katalysieren können. Beispiele hierfür sind Titanate, wie Tetrabutyltitanat oder Titantetraacetylacetonat; Wismutverbindungen, wie Bismut-tris-2-ethylhexanoat; Zinncarboxylate, wie Dibutylzinndilaurat (DBTL), Dibutylzinndiacetat oder Dibutylzinndiethylhexanoat,; Zinnoxide wie Dibutylzinnoxid und Dioctylzinnoxid; Organoaluminumverbindungen wie Aluminumtrisacetylacetonat; Chelatverbindungen wie Zirconumtetraacetylacetonat; Aminverbindungen oder ihre Salze mit Carbonsäuren, wie Octylamin, Cyclohexylamin, Benzylamin, Dibutylamin, Monoethanolamin, Triethanolamin, Diethylenetriamin, Triethylenetetramin, Triethylenediamin, Guanidin, Morpholin, N-methylmorpholin und 1,8-Diazabicyclo-(5,4,0)-undecen-7 (DBU), Silanhaftvermittler mit Aminogruppen. Eine Ausführungsform arbeitet Metall-katalysatorfrei, eine andere setzt den Katalysator, bevorzugt Mischungen mehrerer Katalysatoren, in einer Menge von 0,01 bis etwa 5 Gew.-% bezogen auf das Gesamtgewicht ein. Bevorzugt sind Mengen von 0,1 bis 4 Gew.-%, besonders bevorzugt weniger als 0,4 bis 3 Gew.-% Katalysator.

Der erfindungsgemäße Klebstoff kann auch Haftvermittler enthalten. Es kann sich dabei um reaktive Substanzen handeln, die mit der Substratoberfläche eine Reaktion eingehen können, oder es handelt sich um Substanzen, die die Klebrigkeit auf dem Substrat erhöhen.

Als Haftvermittler werden vorzugsweise organofunktionelle Silane wie hydroxyfunktionelle, (meth)acryloxyfunktionelle, mercaptofunktionelle, aminofunktionelle oder epoxyfunktionelle Silane verwendet. Diese können gegebenenfalls in das Polymernetzwerk eingebaut werden. Beispiele für mercaptofunktionelle Silane sind 3-Mercaptopropyltrimethoxysilan oder 3-Mercaptopropyltrimethoxysilan. Beispiele für (meth)acryloxyfunktionelle Silane sind 3-Acryloxypropyltrialkoxysilan oder 3-Methacryloxypropyltrialkoxysilan. Beispiele für epoxyfunktionelle Silane sind 3-Glycidyloxymethyltrimethoxysilan, 3-Glycidyloxymethyltriethoxysilan oder 2-Glycidoxyethyltrimethoxysilan. Beispiele für aminofunktionelle Silane sind 3-Aminopropylmethyldimethoxysilan, N-(2-Aminoethyl)-3-aminopropyltrimethoxysilan (DAMO), N,N-Di(2-Aminoethyl)-3-aminopropyltrimethoxysilan, N-(2-Aminoethyl)-N'-(2-aminoethyl)-3-aminopropyltri-methoxysilan, Bis-(Triethoxysilylpropyl)-amin, N-(n-Butyl)-3-aminopropyltriethoxysilan oder Mischungen daraus. Entsprechend geeignete Verbindungen sind ebenfalls die analogen Ethoxy- oder Propoxyderivate, ebenso Alkyldialkoxyderivate oder die anstelle der jeweiligen Propylgruppe durch andere Alkylgruppe ersetzten Derivate. Weiterhin können als Haftvermittlerkomponente auch Kondensate der zuvor genannten Aminosilane verwendet werden. Solche Haftvermittler sind in der Literatur bekannt.

Die vorgenannten Haftvermittler werden vorzugsweise in der Bindemittelzusammensetzung in Mengen zwischen 0,1 und 10 Gew.-%, vorzugsweise zwischen 0,5 und 5, besonders bevorzugt zwischen 1 und 4 Gew.-% verwendet.

Als Haftvermittler eignen sich auch klebrigmachende Harze, wie modifizierte oder unmodifizierte Harzsäuren bzw. -ester, Polyamine, Polyaminoamide, Anhydride und Anhydrid-enthaltende Copolymere oder Polyepoxidharzen in geringen Mengen. Typische klebrigmachende Harze (Tackifier) wie Harzsäurederivate werden in Konzentrationen zwischen 5 und 20 Gew.-% eingesetzt, typische Haftvermittler wie Polyamine, Polyaminoamide oder Resorcinderivate werden im Bereich zwischen 0,1 und 10 Gew.-% eingesetzt.

Als Trocknungsmittel sind insbesondere hydrolysierbare Silanverbindungen geeignet. Beispiele dafür sind Carbamatopropyltrimethoxysilan, Alkyltrimethoxysilan, Alkyltriethoxysilan, Vinyltrimethoxysilan, Phenyltrimethoxysilan, Tetraethoxysilan, Vinyltriethoxysilan , Vinyltriacetoxysilan oder Isooctyltrimethoxysilan. Sie bewirken weiterhin, dass der Klebstoff eine höhere Vernetzungsdichte aufweist. Das ergibt nach der Vernetzung Produkte mit einem höheren Modul oder einer höheren Härte. Über die eingesetzte Menge können also diese Eigenschaften gezielt beeinflusst werden.

Mögliche Füllstoffe oder Pigmente können aus einer Vielzahl von Materialien ausgewählt werden. Beispiele dafür sind Kreide, Kalkmehl, gefällte und/oder pyrogene Kieselsäure, Zeolithe, Bentonite, Magnesiumcarbonat, Kieselgur, Tonerde, Ton, Talkum, Schwerspat, Titanoxid, Eisenoxid, Zinkoxid, Sand, Quarz, Flint, Glimmer, Aluminiumpulver, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle oder Kurzfasern, wie Glasfaser, Glasfilament, Polyacrylnitril, Kohlefaser, Kevlarfaser oder auch Polyethylenfasern. Es kann gegebenenfalls zweckmäßig sein, dass zumindest ein Teil der Füllstoffe oberflächenvorbehandelt ist, beispielsweise mit Stearinsäure. Das kann zu einer besseren Verträglichkeit mit den Bindemitteln oder zu einer verbesserten Feuchtigkeitsstabilität führen. Ferner eignen sich als Füllstoffe Hohlkugeln mit einer mineralischen Hülle oder einer Kunststoffhülle, wie beispielsweise Glashohlkugeln. Diese sollen bevorzugt eine Teilchengröße von 500 µm oder weniger aufweisen. Der Gesamtanteil an Pigmenten und Füllstoffen in der Formulierung variiert zwischen 20 und 60 Gew.-%.

Obwohl die Rheologie der erfindungsgemäßen Zusammensetzungen auch durch die Auswahl der Füllstoffe und das Mengenverhältnis der Prepolymeren in den gewünschten Bereich gebracht werden kann, können gegebenenfalls konventionelle Rheologiehilfsmittel wie z.B. pyrogene Kieselsäuren, Bentone, fibrillierte oder Pulp-Kurzfasern oder hydrierte Ricinusöl-Derivate im Bereich zwischen 0,1 und 7 Gew.%, vorzugsweise zwischen 1 und 3 Gew.% zugesetzt werden.

Der erfindungsgemäße Klebstoffs enthält daher:
10 bis 40 Gew.-% eines oder mehrerer Polyoxyalkylenpolymere und/oder Poly(meth)acrylatpolymer mit mindestens einer Silangruppe, insbesondere 2 bis 4 Silangruppen,
0,5 bis 10 Gew.-% mindestens eines bei Raumtemperatur festen Zusatzmittels, das keine mit Silangruppen vernetzbare Gruppe aufweist,
20 bis 60 Gew.-% Pigmente und Füllstoffe, sowie
0,01 bis 25 Gew.-% Hilfsstoffe und Additive, insbesondere Katalysatoren, Haftvermittler; Stabilisatoren und/oder Weichmacher.
Die Gesamtheit aller Bestandteile soll 100 Gew.-% betragen.

Der erfindungsgemäße Klebstoff kann durch Mischen der Bestandteile hergestellt werden. Dabei ist es vorteilhaft, das Mischen bei erhöhter Temperatur durchzuführen, sodass eine leichter fließfähige Zusammensetzung gemischt wird. Ebenso ist es möglich, die Zusammensetzung kontinuierlich in einem Extruder herzustellen. Die Reihenfolge der Zugabe und des Vermischens ist von Viskosität, Konsistenz und Menge der einzelnen Bestandteile abhängig. Dabei sollen die Feststoffe in den flüssigen Bestandteilen gleichmäßig dispergiert werden. Eine gute Vermischung ist sicherzustellen, damit keine Separation einzelner Bestandteile auftreten kann. Es kann zweckmäßig sein, einzelne Bestanteile zu trocknen, damit eine hohe Lagerstabilität sichergestellt wird. Die Art der Herstellung ist im Prinzip bekannt, der Fachmann kann diese abhängig von der Auswahl der Rohstoffe leicht ermitteln.

Die erfindungsgemäßen nicht vernetzten Klebstoffe sind bei Raumtemperatur (23 °C) fest. Unter fest bei Raumtemperatur wird für diese Erfindung verstanden, dass der nicht vernetzte Klebstoff eine Viskosität größer 300 Pas aufweist. Diese hohen Viskositäten der Klebstoffe werden bestimmt nach Physika, Platte/Platte Messkopf, D = 10 sec⁻¹. Die erfindungsgemäßen Klebstoffe sind in der Praxis standfest. Dabei soll ein aufgetragener Klebstoff (Schichtdicke 1 cm/senkrecht positioniert) nicht von selbst verfließen. Die erfindungsgemäßen Klebstoffe können durch Erwärmen erweicht werden, beispielsweise bei Temperaturen bis zu 100 °C. Zweckmäßigerweise sollen die Klebstoffzusammensetzungen lösemittelfrei sein. Dabei soll die Viskosität für eine gute Verarbeitung 5 bis 200 Pas bei Applikationstemperatur betragen, beispielsweise bei einer Temperatur zwischen 40 und 100 °C. Bevorzugt soll die Viskosität bei Applikationstemperatur von 20 bis 100 Pas betragen. Über die Auftragstemperatur kann die Applikationsviskosität beeinflusst werden. Durch die Auswahl der Komponenten wird ein bei Raumtemperatur fester Klebstoff erhalten, der bei Applikationstemperatur niedrigviskos ist, nach der Applikation abkühlt und dann rasch eine hohe Anfangsfestigkeit ergibt.

Es hat sich gezeigt, dass der erfindungsgemäße Klebstoff eine hervorragende Anfangsfestigkeit aufweist. Es ist bekannt, andere hochviskose Klebstoffe aufzutragen, wobei diese durch chemische Reaktion mit den Substraten verkleben. Diese werden jedoch bei Raumtemperatur durch Abkühlen nicht fest, sondern behalten eine Fließfähigkeit bei. Als Konsequenz können miteinander verbundene Teile noch bis zur Vernetzung gegeneinander verschoben werden. Der erfindungsgemäße Klebstoff weist nach Abkühlen auf Raumtemperatur eine hervorragende Anfangsfestigkeit auf. Die Anfangsfestigkeit wird durch ein einfaches Testverfahren ermittelt, bei dem zwei Substrate miteinander verklebt werden, und danach senkrecht befestigt werden. An das eine nicht befestigte Substrat wird ein Gewicht angebracht und die Zeit bestimmt, bis zu der das zweite Substrat vom ersten Substrat abrutscht. Während die bekannten fließförmigen Klebstoffe bei Belastung in weniger als 15 Sekunden gegeneinander abrutschen, ist bei dem erfindungsgemäßen Klebstoff kein Verrutschen zu beobachten. Die Anfangsfestigkeit ist wesentlich verbessert.

Der erfindungsgemäße Klebstoff weist bei nur leicht erhöhten Temperaturen eine gute Applikationsviskosität auf. Im Gegensatz zu bekannten Schmelzklebstoffen auf anderer chemischer Basis muss er nicht über 100 °C erhitzt werden. Dadurch ist auch in dicker Schicht eine schnelle Abkühlung zu beobachten, weiterhin wird der Klebstoff und das Substrat geringer thermisch belastet. Er kann bei Temperaturen von 40 bis 100 °C, insbesondere zwischen 50 bis 90 °C auf die Substrate aufgebracht werden.

Der erfindungsgemäße Klebstoff kann für verschiedene Verklebungen eingesetzt werden. Beispielsweise wird der erfindungsgemäße Klebstoff erwärmt und als niedrigviskose Masse aufgetragen. Der Klebstoff kann in Form einer Raupe aufgetragen werden. Danach werden die festen Substrate in der passenden Form zusammengefügt. Bei dem Abkühlen wird die Klebstoffzusammensetzung wieder fest und entwickelt schnell eine gute Anfangfestigkeit (green strength). Danach kann das verklebte Teil weiterbefördert, gelagert oder weiterverarbeitet werden.

Die Haftkraft ist ausreichend um bei den üblichen Bearbeitungsvorgängen ein Verrutschen der verklebten Teile zu verhindern.

Eine andere Ausführungsform ist das Auftragen des erfindungsgemäßen Klebstoffs in vorgebildete Spalten, Nuten oder Fugen. Dabei wird dann durch Abkühlung eine hohe Anfangsfestigkeit aufgebaut.

Eine andere Anwendungsmöglichkeit ist die Verwendung des Klebstoffs zum Verkleben von flexiblen Substraten. Beispielsweise ist es möglich, auf ein starres oder flexibles Substrat den Klebstoff flächig aufzutragen. Daraufhin wird ein zweites flächiges Substrat, beispielsweise eine flexible Folie aufgebracht. Anschließend werden die beiden Substrate miteinander verpresst. Die Substrate sind schnell rutschfest miteinander verbunden. Bei der Lagerung unter üblichen Umgebungsbedingungen vernetzt der Klebstoff endgültig mit Luftfeuchtigkeit durch chemische Reaktion. Er baut dabei seine Härte, seine Haftung und die Elastizität auf.

Die erfindungsgemäßen Klebstoffe können zum Verkleben von verschiedenen Substraten eingesetzt werden. Beispielsweise können starre Substrate, wie Glas, Aluminium, Metall, Keramik, Kunststoff oder Holzsubstrate, ggf. auch lackierten Oberflächen oder anderen beschichteten Oberflächen miteinander verklebt werden. Weiterhin können auch flexible Substrate wie Kunststofffolien oder Metallfolien miteinander oder mit festen Substraten verklebt werden. Es können vollflächige Verklebungen hergestellt werden, es ist ebenfalls möglich, dass am Rand von festen Substraten ein Streifen des erfindungsgemäßen Klebstoffs aufgetragen wird, der so auf einem begrenzten Gebiet mit einem anderen Substrat verklebt wird. Dabei kann der Klebstoff auch in dickerer Schicht bis zu 15 mm eingesetzt werden.

Die erfindungsgemäß verklebten Substrate weisen eine hohe Temperatur-, Licht-, und Witterungs-Stabilität auf. Auch unter dauerhafter UV-Bestrahlung, z.B. bei Fotovoltaikanlagen oder ihren Bestandteilen ist kein Abbau der Polymeren des Klebstoffs zu beobachten. Ebenso ist die Haftung zu dem Untergrund stabil. Ein weiterer Vorteil ist die hohe Flexibilität des Klebstoffs. Der Klebstoff bleibt auch bei erhöhter Temperatur bei äußerer Bewitterung der verklebten Substrate elastisch. Mögliche thermische Ausdehnungen der Substrate untereinander führen nicht zu einem Brechen der Verklebung.

Durch die erfindungsgemäße Auswahl der Rohstoffe werden über Silangruppen vernetzbare Klebstoffe erhalten, die eine niedrige Verarbeitungstemperatur aufweisen, gleichzeitig eine hohe Anfangsfestigkeit ausbilden und so einen schnelleren Verarbeitungsprozess erlauben. Durch das gewählte Vernetzungssystem, werden im Vergleich zu bekannten NCO-härtenden Systemen arbeitshygienisch weniger bedenkliche Klebstoffe erhalten, ein gutes Eigenschaftsprofil aufweisen.

Die erfindungsgemäßen verklebten Teile können in verschiedenen Bereichen angewendet werden. Beispielsweise können sie im Baubereich, als Konstruktionsklebstoff für Anlagenteile oder zum Verkleben von flexiblen Folien mit festen Substraten eingesetzt werden.

### Beispiele: (Mengenangabe in Teilen)

| | Beispiel 1 | Beispiel 2 | Beispiel 3 | Vergleich |
|---|---|---|---|---|
| Silanmodifiziertes Prepolymer 1 | 33,1 | | | Terostat MS 939 (kommerziell erhältlich) |
| Prepolymer 2 | | 33,1 | 33,1 | |
| Weichmacher | 9,7 | 9,7 | 8,2 | |
| Stabilisator | 1,2 | 1,2 | 1,2 | |
| Rheologiehilfsmittel | 2,0 | 2,0 | 2,0 | |
| Titandioxid | 6,0 | 6,0 | 6,0 | |
| Kreide | 45,6 | 45,6 | 45,6 | |
| Lichtschutzmittel | 0,05 | | | |
| Festes Zusatzmittel 1 | 4,5 | 4,5 | | Kein festes Zusatzmittel |
| Festes Zusatzmittel 2 | | | 1,0 | |
| Trocknungsmittel | 1,5 | 1,5 | 1,5 | |
| Haftvermittler | 1,6 | 1,6 | 1,6 | |
| Katalysator (Sn-basiert) | 0,8 | | | |

| | Beispiel 1 | Beispiel 2 | Beispiel 3 | Vergleich |
|---|---|---|---|---|
| Viskosität 23°C / Pas | X¹⁾ | X | X | 200 |
| Viskosität 85°C / Pas | 126 | 174 | 150 | -/ |
| Shore A | 52 | 74 | 62 | 49 |
| Position tack / 300g | +²⁾ | + | + | -⁴⁾ |
| Position tack / 1000 g | +/0³⁾ | +/0³⁾ | + | - |
| Zugfestigkeit/Mpa 7d | 2,6 | 3,0 | 2,6 | 3,4 |
| Reißdehnung / % , 7d | 330 | 140 | 180 | 290 |
| Modul/MPa, 50%,7 d | 0,9 | 2,0 | 1,6 | 1,0 |

| | | | | |
|---|---|---|---|---|
| ¹⁾ x = nicht messbar ²⁾ = kein verrutschen ³⁾ = rutscht langsam ab (> 5 min) ⁴⁾ = sofortiges Abrutschen | | | | |

### Verfahren zum Bestimmen der Anfangsfestigkeit ( position tack )

Es wird auf einem starren Substrat ein Klebstoff aufgetragen (Schichtstärke ca. 2 mm). Dieser wird unmittelbar danach unter leichten Druck mit einem zweiten Substrat verklebt. Die verklebte Fläche soll 100 x 15 mm betragen. Nach 5 min. Wartezeit wird der Verbund an einem Substratteil senkrecht aufgehängt. Am anderen Substratteil wird ein Gewicht befestigt und die Zeit bis zum Abrutschen bestimmt.

### 300 g Gewicht:

Bei flüssigviskosen Vergleichsklebstoffen rutscht das zweite Substrat ab.
Bei einer Verklebung mit den erfindungsgemäßen Beispielen ist nach einer Zeit von 10 min. kein Abrutschen der verklebten Fläche zu beobachten.

1000 g Gewicht: Verklebung mit einer Zusammensetzung nach Beispiel 3 wird kein Verrutschen festgestellt. Bei den Beispielen 1 und 2 ist in einem Zeitraum bis zu 5 min. ein langsames Verrutschen der Verklebung zu beobachten.

### Rohstoffe:

Weichmacher : Mesamoll
Lichtschutzmittel : Tinuvin
Trocknungsmittel : Silan VTMO
Haftvermittler : Silan AMMO
Festes Zusatzmittel 1 : Arkon P125
Festes Zusatzmittel 2 : Dynacoll 7490
Prepolymer 1 : MS-Polymer S303
Prepolymer 2 : Geniosil STP-E10

## Patentansprüche

1. Ein-Komponenten feuchtigkeitshärtender, bei 23 °C in nicht vernetztem Zustand eine Viskosität größer 300 Pas, bestimmt nach Physika, Platte/Platte Messkopf, D = 10sec⁻¹, aufweisender Klebstoff enthaltend
a) 10 bis 40 Gew.-% mindestens eines fließfähigen Polyoxyalkylen- oder Polyacrylat-Prepolymers mit mindestens einer hydrolysierbaren Silangruppe,
b) 0,5 bis 10 Gew.-% mindestens eines bei Raumtemperatur festen inerten Zusatzmittels mit einem Erweichungspunkt, gemessen nach DIN ISO 4625, von mehr als 70 bis 150 °C ausgewählt aus Kohlenwasserstoffharzen, Polyestern oder Polyamiden,
c) 20 bis 60 Gew.-% Pigmente und Füllstoffe, sowie
d) 0,01 bis 25 Gew.-% Hilfsstoffe und Additive,
wobei die Summe 100 % betragen soll.

2. Klebstoff nach Anspruch 1, **dadurch gekennzeichnet, dass** der Klebstoff bei 50 bis 100°C eine Viskosität von 5 bis 200 Pas aufweist.

3. Klebstoff nach Anspruch 1 oder 2, **dadurch gekennzeichnet, dass** das Prepolymer mindestens zwei hydrolysierbaren Silangruppen aufweist.

4. Klebstoff nach einem der Ansprüche 1 bis 3, **dadurch gekennzeichnet, dass** als hydrolisierbare Silangruppen Trialkoxysilangruppen oder Alkyldialkoxysilangruppen enthalten sind.

5. Klebstoff nach einem der Ansprüche 1 bis 4, **dadurch gekennzeichnet, dass** das feste Zusatzmittel einen Erweichungsbereich +/- 15 °C aufweist.

6. Klebstoff nach einem der Ansprüche 1 bis 5, **dadurch gekennzeichnet, dass** das feste Zusatzmittel in fein verteilter Form enthalten ist.

7. Klebstoff nach einem der Ansprüche 1 bis 6, **dadurch gekennzeichnet, dass** feste Zusatzmittel keine mit Silangruppen reaktive Gruppe enthält.

8. Klebstoff nach einem der Ansprüche 1 bis 7, **dadurch gekennzeichnet, dass** als Hilfsstoff und Additive Katalysatoren, Haftvermittler, Pigmente, Stabilisatoren und/oder Weichmacher enthalten sind.

9. Klebstoff nach Anspruch 8, **dadurch gekennzeichnet, dass** entweder kein Weichmacher enthalten ist oder mindestens ein Weichmacher enthalten ist, der polare Gruppen aufweist, wie Ester-, Amid-, OH- oder -(C₂H₄O-)ₙ Gruppen.

10. Verwendung eines Klebstoffs nach einem der Ansprüche 1 bis 9 zum Verkleben von Glas-, Metall-, Keramik-, Holz-, und/oder Kunststoffsubstraten.

11. Verwendung nach Anspruch 10 als Kleb- und Dichtstoff zum Verkleben von starren oder flexiblen Substraten.

## Claims

1. A one-component moisture-curing adhesive exhibiting, in the uncrosslinked state at 23°C, a viscosity of greater than 300 Pa·s, determined by the Physika method, plate/plate measuring head, D = 10 sec⁻¹, containing
a) 10 to 40 wt.% of at least one flowable polyoxyalkylene or polyacrylate prepolymer with at least one hydrolysable silane group,
b) 0.5 to 10 wt.% of at least one inert additive solid at room temperature selected from hydrocarbon resins, polyesters or polyamides with a softening point of more than 70 to 150°C, measured to DIN ISO 4625,
c) 20 to 60 wt.% of pigments and fillers, and
d) 0.01 to 25 wt.% of auxiliary substances and additives,
wherein the total is intended to amount to 100%.

2. An adhesive according to claim 1, **characterised in that** the adhesive exhibits a viscosity of 5 to 200 Pa·s at 50 to 100°C.

3. An adhesive according to one of claim 1 or claim 2, **characterised in that** the prepolymer comprises at least two hydrolysable silane groups.

4. An adhesive according to one of claims 1 to 3, **characterised in that** trialkoxysilane groups or alkyldialkoxysilane groups are present as hydrolysable silane groups.

5. An adhesive according to one of claims 1 to 4, **characterised in that** the solid additive exhibits a softening range of +/- 15°C.

6. An adhesive according to one of claims 1 to 5, **characterised in that** the solid additive is present in finely dispersed form.

7. An adhesive according to one of claims 1 to 6, **characterised in that** the solid additive contains no groups reactive with silane groups.

8. An adhesive according to one of claims 1 to 7, **characterised in that** catalysts, adhesion promotors, pigments, stabilisers and/or plasticisers are present as the auxiliary substance and additives.

9. An adhesive according to claim 8, **characterised in that** either no plasticiser is present or at least one plasticiser is present which comprises polar groups such as ester, amide, OH or (C₂H₄O)ₙ groups.

10. Use of an adhesive according to one of claims 1 to 9 for the adhesive bonding of substrates of glass, metal, ceramics, wood and/or plastics.

11. Use according to claim 10 as an adhesive and sealant for the adhesive bonding of rigid or flexible substrates.

## Revendications

1. Adhésif monocomposant durcissant sous l'action de l'humidité, ledit adhésif présentant à 23 °C à l'état non-réticulé une viscosité supérieure à 300 Pas, déterminée selon Physika, plaque / plaque tête de mesure, D = 10 sec-1, et contenant
a) 10 à 40 % en poids d'au moins un prépolymère de type polyoxyalkylène ou polyacrylate qui est fluide et pourvu d'au moins un groupe silane hydrolysable,
b) 0,5 à 10 % en poids d'au moins un complément inerte, solide à température ambiante, ayant un point de ramollissement, mesuré selon DIN ISO 4625, supérieur à 70 à 150 °C, choisi parmi les résines d'hydrocarbures, les polyesters ou les polyamides,
c) 20 à 60 % en poids de pigments et de charges, et
d) 0,01 à 25 % en poids des agents auxiliaires et des additifs, le total étant de 100 %.

2. Adhésif selon la revendication 1, **caractérisé en ce que** ledit adhésif présente, dans l'intervalle allant de 50 à 100°C, une viscosité comprise entre 5 et 200 Pas.

3. Adhésif selon l'une des revendications 1 ou 2, **caractérisé en ce que** le prépolymère comporte au moins deux groupes silane hydrolysables.

4. Adhésif selon l'une quelconque des revendications 1 à 3, **caractérisé en ce qu'**il contient, en tant que groupes silane hydrolysables, des groupes trialcoxysilane ou des groupes alkyldialcoxysilane.

5. Adhésif selon l'une des revendications 1 à 4, **caractérisé en ce que** ledit complément solide présente un intervalle de ramollissement de +/-15 °C.

6. Adhésif selon l'une des revendications 1 à 5, **caractérisé en ce qu'**il contient ledit complément solide sous une forme finement dispersée.

7. Adhésif selon l'une des revendications 1 à 6, **caractérisé en ce que** ledit complément solide ne contient pas de groupe susceptible de réagir avec des groupes silane.

8. Adhésif selon l'une des revendications 1 à 7, **caractérisé en ce qu'**il contient, à titre d'agent auxiliaire et d'additifs, des catalyseurs, des promoteurs d'adhérence, des pigments, des agents stabilisateurs et/ou des plastifiants.

9. Adhésif selon la revendication 8, **caractérisé en ce que**, soit il ne contient aucun plastifiant, soit il contient au moins un plastifiant comportant des groupes polaires tels que des groupes ester, amide, OH ou en -(C₂H₄O-)ₙ.

10. Utilisation d'un adhésif selon l'une des revendications 1 à 9 pour coller des substrats en verre, en métal, en céramique, en bois et/ou en plastique.

11. Utilisation selon la revendication 10 en tant qu'agent d'adhérence et d'étanchéité destiné à coller des substrats rigides ou flexibles.
